# EUROPÄISCHE PATENTSCHRIFT

(11) **EP 2 475 629 B1**
(45) Veröffentlichungstag und Bekanntmachung des Hinweises auf die Patenterteilung: **12.03.2014**
(21) Anmeldenummer: 10784959.8
(22) Anmeldetag: 13.09.2010
(51) Int. Cl.: C04B 28/00, C04B 26/32

(54) **GEOPOLYMERES MATERIAL**
GEOPOLYMERIC MATERIAL
MATÉRIAU GÉOPOLYMÈRE

(30) Priorität: 11.09.2009 DE 102009043988
(43) Veröffentlichungstag der Anmeldung: 18.07.2012
(73) Patentinhaber: Inomat GmbH, 66538 Neunkirchen (DE); Neotechnology, LLC., Las Vegas, NV 89101 (US)
(72) Erfinder: BERNI, Anette, 66894 Käshofen (DE); KALLEDER, Axel, 66440 Blieskastel (DE); GIER, Andreas, 66121 Saarbrücken (DE); ESPIN ALTUVE, Douglas Alexander, 66130 Saarbrücken (DE)
(74) Vertreter: Vièl, Christof
(86) Internationale Anmeldenummer: PCT/DE2010/075088
(87) Internationale Veröffentlichungsnummer: WO 2011/029444

(56) Entgegenhaltungen:
- EP-A1- 0 589 831
- WO-A2-2008/113609

## Beschreibung

Die Erfindung betrifft ein geopolymeres Material, ein Verfahren zur Herstellung eines geopolymeren Materials und die Verwendung eines geopolymeren Materials.

Das Konzept der Geopolymere wurde durch Joseph Davidovits (Journal of thermal Analysis, Vol. 37, 1633-1656, 1991) erstmals im Jahre 1970 bekannt. Im Wesentlichen beschreibt das Verfahren die Herstellung eines anorganischen Polymers auf Basis von Alumo-Silikaten. Als Aktivatoren für die Polymerisation dienen Natrium-, Kalium- oder Kalziumzusätze. Diese Geopolymere zeigen eine sehr hohe Alkali- und Säureresistenz, die auch bei hohen Temperaturen erhalten bleibt.

Aus der US 4,472,199 A sind Geopolymere auf Basis von Alumo-Silikaten zur Herstellung von Zeolithen bekannt. In der US 4,509,985 A wird die Herstellung hochfester Geopolymere beschrieben, wobei dem ursprünglichen Alumosilikat noch Aktivatoren der Form Natrium und Kalium hinzugefügt werden. Diese Gemische zeigen eine deutlich erniedrigte Sintertemperatur gegenüber früheren Systemen.

Die US 5,798,307 A gibt einen Überblick über weiteren Stand der Technik zu Geopolymeren, wobei das Patent selbst den Einsatz spezieller Geopolymere zur Verfestigung von Glasfasern beschreibt. In J.C. Swanepoel und C.A. Strydom: "Utilisation of fly ash in geopolymeric material", Applied Geochemistry, Vol. 17, Issue 8, 1143 - 1148, 2002, wird darüber hinaus auch die Herstellung von Geopolymeren durch Verwendung von Flugasche beschrieben. Diese Verwendung wird auch im Patent WO 03/078349 A1 beschrieben.

Die US 5,228,913 A beschreibt verschiedene Zusammensetzungen, die auch in der Anwesenheit von Wasser in Giesformen aushärten.

Eine Anwendung von Geopolymeren im Bereich Brandschutz wird der US 6,992,027 A erwähnt. Hierbei werden Geopolymere zum Binden von Aluminiumoxid-Partikeln eingesetzt und brandschützende Platten erzeugt.

Die WO 2008/113609 A1 beschreibt eine spezielle Zusammensetzung von Geopolymeren zur Herstellung von Beschichtungsmaterialien.

EP 0 589 831 A1 offenbart ein Material zur Befestigung von Verankerungsmitteln in Bohrlöchern, auf Basis eines anorganischen Bindemittels - wie beispielsweise ein geopolymeres Bindemittel - in Kombination mit einem organischen Bindemittel auf der Basis von Vinylestern - wie beispielsweise Epoxyacrylaten -, die mit Hilfe eines Härters vernetzt werden.

Mit diesen traditionellen Methoden zur Herstellung von Geopolymere ist es möglich, neben Bulkmaterialien auch Beschichtungen herzustellen. Die bisher bekannten Geopolymere zeigen nur bei ganz bestimmten Bedingungen, wie z.B. bestimmten Verdichtungstemperaturen (>600°C) und Luftfeuchtigkeit eine ausreichende Verdichtung, was den Einsatz dieser Materialien oft stark einschränkt.

Aufgabe der Erfindung ist es, ein geopolymeres Material zu schaffen, das eine besser Haftung zum Substrat und zu eventuell notwendigen Füllpartikel zeigt und schon bei niedrigeren Temperaturen gute mechanische und chemische Beständigkeiten aufweist. Auch eine höhere Flexibilität in niederen Temperaturbereichen soll erreicht werden.

Diese Aufgabe wird erfindungsgemäß durch ein geopolymeres Material gelöst, wobei das Material 10 bis 80 Gew.-% Film bildende Precursoren eines Kieselsäureesters und eines löslichen Metallsalzes oder mehrerer löslicher Metallsalze von Al, Zr, Ti, Sn und Ce, 0 bis 50 Gew.-% nano- und/oder mikroskaliger Füllpartikel, 0.5 bis 40 Gew.-% einer Alkali- oder Erdalkaliverbindung und 0,5 bis 50 Gew.-% organisches Polymer enthält, wobei das Polymer durch einen für das jeweilige Polymer geeigneten Initiator mit dem Precursor vernetzt ist.

Im Rahmen der Erfindung wird über den Sol-Gel-Prozeß ein organisch modifiziertes Material mit geopolymerer Zusammensetzung erhalten. Im Gegensatz zu sonstigen geopolymeren Materialien können diese Materialien bereits bei niedrigen Temperaturen im Bereich zwischen Raumtemperatur und 140°C bzw. durch UV-Bestrahlung gehärtet werden und zeigen nach Härtung bereits eine hohe mechanische und chemische Beständigkeit. Beispielsweise beim Einsatz als Bindemittel wurden hohe Festigkeiten der Prüfkörper ermittelt.

Bei Erhöhung der Gebrauchstemperatur auf bis zu 950°C gehen, im Gegensatz zu polymeren Materialien sowohl die Schutzwirkungen als auch die Festigkeiten nicht verloren. Die organischen Bestandteile werden rückstandsfrei aus dem Binder entfernt und es bildet sich ein rein anorganisches geopolymeres Material aus, das ebenfalls eine hohe chemische und mechanische Beständigkeit aufweist. Selbst während des Ausbrennens der organischen Bestandteile ist kein Abfall der mechanischen Beständigkeit feststellbar.

Dieser Erfindung liegt die Idee zu Grunde, über eine geänderte Synthese unter Einbeziehung von Kieselsäureestern, auch organisch modifizierten Kieselsäureestern, und löslichen Metallsalzen ein flexibles geopolymeres Material zu erhalten. Durch geeignete Auswahl der Ausgangsstoffe können geopolymere Materialien erhalten werden, die durch Ausbildung chemischer Bindung an die Substrate angebunden werden können und durch organische Modifikation hinsichtlich ihrer Aushärtebedingung (Temperatur und Zeit) an die jeweiligen Anforderungen angepaßt werden können.

Bei den erfindungsgemäßen geopolymeren Materialien sind im Gegensatz zu Geopolymeren aus dem Stand der Technik weitere Verarbeitungsschritte nach Schichtauftrag möglich. Durch die Verwendung der organischen Modifikation erhalten die Beschichtungen weiterhin bereits bei Temperaturen ab 80°C eine ausreichende chemische und mechanische Beständigkeit. Bei höheren Temperaturen, sei es während der Fertigung oder im Gebrauch, treten die organischen Bestandteile aus und es bildet sich eine rein anorganische geopolymere Matrix aus, die das Substrat ausreichend schützt. Durch die Verwendung der Kieselsäureester und der löslichen Metallsalze wird durch den Aufbau von Mel-O-Si bzw. Mel-O-Me2-Bindungen eine gute Bindung zu den Substraten und den verwendeten Füllpartikeln aufgebaut.

Erfindungsgemäß ist vorgesehen, daß das bzw. die löslichen Metallsalze ausgewählt sind aus der Gruppe bestehend aus AIOOH, Aluminum-sec-butylat, Zirkon-n-Propoxyd und Titan-n-butylat.

Eine bevorzugte Ausbildung der Erfindung besteht darin, daß die Kieselsäureester folgender Formel entsprechen:

Rₐ(SiX)₄₋ₐ Formel 1

wobei in Formel 1
die Reste R gleich oder verschieden sind und polymerisierbare, nicht-hydrolysierbare Gruppen darstellen,
die Reste X am Siliziumatom gleich oder verschieden sind und hydrolysierbare Gruppen oder Hydroxygruppen, allgemein Silan-Haftgruppen, bedeuten und
a den Wert 1, 2 oder 3 hat, oder einem davon abgeleiteten Oligomer.

Als Edukt kann auch eine schon vernetzte Variante des oben gezeigten Silans verwendet werden, beispielsweise ein Methylpolysiloxan, hergestellt aus Methyltriethoxysilan, welches dann über Hydrolyse über mehrere SiOH-Gruppen miteinander zu einem längerkettigen Siloxan kondensiert wird.

Der Wert a ist hierbei bevorzugt 1.

Es ist zur Erfindung gehörig, daß das Material mit 1 bis 80 Gew.-% (bezogen auf die Masse des geopolymeren Materials) eines Ankermoleküls ausgewählt aus der Gruppe bestehend aus y-Glycidyloxypropyltrimethoxysilan, y-Glycidyloxypropyltriethoxy-silan, 3-Aminopropyltrimethoxysilan, N-(2-Aminoethyl)-3-aminopropyltrimethoxy-silan, 3-Acryloxypropyltrimethoxysilan, 3-Acryloxypropyltriethoxysilan, 3-Methacryloxypropyltrimethoxysilan, 3-Methacryloxypropyltriethoxysilan, Methyltriethoxysilan und Tetraethoxysilan vermischt ist.

Dieses Ankermolekül dient zur chemischen Anbindung an das Substrat, insbesondere an Sand oder an Metalle, wobei über OH-Gruppen an die Oberfläche des Substrates ankondensiert wird.

Es ist erfindungsgemäß vorgesehen, daß die Alkali-, bzw. Erdalkaliverbindung ausgewählt ist aus der Gruppe bestehend aus Salzen oder Hydroxiden von Na, K oder Ca, insbesondere NaOH, KOH, NaCl, KCl und Ca(OH)₂ ist.

Die Hydrolyse und Kondensation der einzelnen Reaktionspartner erfolgt unter Zuhilfenahme einer Säure bzw. einer Base, wobei die obengenannten bevorzugt werden.

Weiterhin ist zur Erfindung gehörig, daß das organische Polymer ausgewählt ist aus Polyacrylaten und Polymeren auf Epoxidbasis.

In diesem Zusammenhang ist erfindungsgemäß vorgesehen, daß der Initiator für Acrylate und Methacrylate 1-Hydroxy-cyclohexyl-phenyl-keton und für Epoxide Iodonium, (4-methylphenyl) [4-(2-methylpropyl) phenyl]-hexafluorophosphat (1-))] ist.

Erfindungsgemäß ist auch, daß das geopolymere Material Zusatzpigmente ausgewählt aus der Gruppe bestehend aus Al, Al₂O₃, ZrO₂ und ZnO enthält.

Im Rahmen der Erfindung liegt auch ein Verfahren zur Herstellung eines geopolymeren Materials, wobei
- zur Herstellung einer Lösung A 25 bis 70 Gew.-% (bezogen auf die Gesamtmatrix) Kieselsäureester vorgelegt werden, die nur anorganisch über eine Hydrolyse- und Kondensationsreaktion miteinander vernetzt werden, wobei die Hydrolyse- und Kondensationsreaktion basisch mit 4,5 bis 15,5 Gew.-% (bezogen auf die Gesamtmatrix) Alkali- oder Erdalkaliverbindungen der Form NaOH, KOH, NaCl oder KCl gestartet wird und 22,5 bis 35 Gew.-% (bezogen auf die Gesamtmatrix) einer Metallverbindung der Form AIOOH, Aluminium-sec-butylat oder Zirkon-n-Propoxyd oder Titan-n-butylat zugegeben werden und
- zur Herstellung einer Lösung B 5 bis 35 Gew.-% (bezogen auf die Gesamtmatrix) Kieselsäureester vorgelegt werden, die nur anorganisch über eine Hydrolyse- und Kondensationsreaktion miteinander vorvernetzt werden, wobei die Hydrolyse- und Kondensationsreaktion neutral unter Rückfluß, basisch oder sauer mit 0 bis 4 Gew.-% (bezogen auf die Gesamtmatrix) einer Base oder einer Säure gestartet wird und 5 bis 25 Gew.-% (bezogen auf die Gesamtmatrix) eines organischen Polymers sowie 0,5 bis 4 Gew.-% (bezogen auf die Gesamtmatrix) eines entsprechenden Thermo- oder UV-Starters zugegeben werden und
- anschließend die Lösungen A und B miteinander gemischt werden.

Bei diesem Verfahren ist vorgesehen, daß in Lösung A Kieselsäureester der Form

R¹ₐSiX₄₋ₐ (Formel A)

verwendet werden, wobei in Formel A
die Reste R¹ gleich oder verschieden sind und nicht polymerisierbare, nichthydrolysierbare Gruppen darstellen,
die Reste X am Siliziumatom gleich oder verschieden sind und hydrolysierbare Gruppen oder Hydroxygruppen, allgemein Silanhaftgruppen sind und
a den Wert 0, 1, 2 oder 3 hat, oder einem davon abgeleiteten Oligomer.

Ebenso ist bei diesem Verfahren vorgesehen, daß in Lösung B Kieselsäureester der Form

R²ₐSiX₄₋ₐ (Formel B)

verwendet werden, wobei in Formel B
die Reste R² gleich oder verschieden sind und polymerisierbare, nichthydrolysierbare Gruppen darstellen,
die Reste X am Siliziumatom gleich oder verschieden sind und hydrolysierbare Gruppen oder Hydroxygruppen, allgemein Silanhaftgruppen sind und
a den Wert 1, 2 oder 3 hat, oder einem davon abgeleiteten Oligomer.

Sowohl in Formel A als auch in Formel B ist der bevorzugte Wert für a 1.

Es ist zur Erfindung gehörig, daß zu der Lösung A makroskopische Partikel zugegeben werden.

Diese können zu Dekorationszwecken dienen oder dazu bestimmt sein, eine chemische Schutzwirkung hervorzurufen.

Schließlich liegt auch die Verwendung des erfindungsgemäßen geopolymeren Materials als Bindemittel oder als Beschichtungsmittel im Rahmen der Erfindung.

Nachfolgend wird die Erfindung anhand von Ausführungsbeispielen näher erläutert.

### Beispiel 1: Herstellung eines Bindemittels zur Verfestigung von Sand

### Lösung A:

17,8 g Methyltriethoxysilan und 5,2 g Tetraethoxysilan werden unter Verwendung von 5,76 g 0,1 molarer NaOH unter Rühren bei Raumtemperatur vorhydrolysiert. Anschließend werden noch 3 g Böhmit OS1 der Fa. Sasol unter Rühren hinzu gegeben und für 2 Stunden bei 50°C unter Rückfluß homogenisiert, bis eine transparent Flüssigkeit erhalten wird. Nach dieser Rührzeit wird zu der Lösung ein Aminoethylaminopropyltrimethoxysilan hinzugefügt und für weitere 30 Minuten gerührt.

### Lösung B:

Parallel hierzu wird 10 g Methacryloxypropyltrimethoxysilan zusammen mit 2,17 g Wasser unter Rückfluß für 4 h bei 80 °C gekocht und anschließend werden zu diesem Vorhydrolysat noch 5 g eines Acrylates der Fa. Cytec Typ Ebecryl 645 zugegeben. Zu dieser Mischung wird nun noch 0,2 g Thermostarter Typ BEC 160 der Fa. Peroxan gegeben.

Lösung B wird nun unter Rühren zu Lösung A gegeben.

Die fertige Mischung wird nun in eine mit Sand gefüllte Kunststoffspritze gefüllt, die anschließend dicht verschlossen wird. Die Aushärtung erfolgt in einem Trockenschrank bei 80°C für 5 Stunden.

Die Druckfestigkeit des ausgehärteten Formkörpers lag bei 14 Mpa ± 2 Mpa.

Nach einer weiteren Temperaturbelastung von 500°C bleibt der Formkörper weiterhin erhalten und man erhält noch eine Druckfestigkeit von 10 Mpa ± 2 Mpa.

Auch bei einer Temperaturbehandlung von 700°C werden noch Festigkeiten von 8 Mpa ± 2 Mpa erreicht.

### Beispiel 2: Herstellung einer Hochtemperatur-Schutzschicht, die bereits bei 80°C ausreichende mechanische und chemische Beständigkeit zeigt

### Lösung A:

17,8 g Methyltriethoxysilan und 5,2 g Tetraethoxysilan werden unter Verwendung von 5,76 g 0,1 molarer KOH unter Rühren bei Raumtemperatur vorhydrolysiert. Anschließend werden noch 3 g Böhmit OS1 der Fa. Sasol unter Rühren hinzu gegeben und für 2 Stunden bei 50°C unter Rückfluß homogenisiert bis eine transluzente Flüssigkeit erhalten wird. Nach dieser Rührzeit wird der Lösung 0,56 g Aminethylaminopropyltrimethoxysilan hinzu gegeben und für weitere 30 Minuten gerührt. Anschließend erfolgt noch eine Zugabe von 4 g Aluminiumpigment (Typ Powdal 130).

### Lösung B:

Parallel hierzu wird 10 g Glycidyloxypropyltriethoxysilan zusammen mit 1,94 g Wasser unter Rückfluß für 4 h bei 80 °C gekocht und anschließend werden zu diesem Vorhydrolysat noch 4,5 g eines Epoxydes der Fa. Polypox Typ R 20 zugegeben.

Lösung B wird nun unter Rühren zu Lösung A gegeben.

Die fertige Mischung wird nun mit Hilfe einer Becherpistole auf eine Stahlprobe (Typ ST 37) aufgesprüht. Die Aushärtung erfolgt in einem Trockenschrank bei 100°C während 30 Minuten.

Die so erhaltenen Beschichtungen haben nach Trocknung bereits eine Kratzfestigkeit von ca. 200 g (gemessen mit einem Prüfstift der Fa. Braive).

Die Beständigkeit im Salzsprühnebeltest wird dabei verdoppelt (von ca. 50 h auf 100 h).

Die applizierten Beschichtungen können in einem weiteren Schritt auf Temperaturen von bis zu 950°C verdichtet werden, ohne daß bei dieser Temperaturbehandlung Risse entstehen. Nach Abkühlung liegt die Kratzfestigkeit nun bei ca. 600 g und die Beständigkeit im Salzsprühnebeltest liegt nun bei 400 h.

## Patentansprüche

1. Geopolymeres Material, **dadurch gekennzeichnet, daß** das Material 10 bis 80 Gew.-% Film bildende Precursoren eines Kieselsäureesters und eines löslichen Metallsalzes oder mehrerer löslicher Metallsalze von Al, Zr, Ti, Sn und Ce, 0 bis 50 Gew.-% nano- und/oder mikroskaliger Füllpartikel, 0,5 bis 40 Gew.-% einer Alkali- oder Erdalkaliverbindung und 0,5 bis 50 Gew.-% organisches Polymer enthält, wobei das Polymer durch einen für das jeweilige Polymer geeigneten Initiator mit dem Precursor vernetzt ist.

2. Geopolymeres Material gemäß Anspruch 1, **dadurch gekennzeichnet, daß** das bzw. die löslichen Metallsalze ausgewählt sind aus der Gruppe bestehend aus AlOOH, Aluminium-sec-butylat, Zirkon-n-Propoxyd und Titan-n-butylat.

3. Geopolymeres Material gemäß Anspruch 1, **dadurch gekennzeichnet, daß** die Kieselsäureester folgender Formel entsprechen:
RₐSiX₄₋ₐ (Formel 1),
wobei in Formel 1
die Reste R gleich oder verschieden sind und polymerisierbare, nichthydrolysierbare Gruppen darstellen,
die Reste X am Siliziumatom gleich oder verschieden sind und hydrolysierbare Gruppen oder Hydroxygruppen, allgemein Silan-Haftgruppen, bedeuten und
a den Wert 1, 2 oder 3 hat, oder einem davon abgeleiteten Oligomer.

4. Geopolymeres Material gemäß Anspruch 1, **dadurch gekennzeichnet, daß** das Material mit 1 bis 80 Gew.-% (bezogen auf die Masse des geopolymeren Materials) eines Ankermoleküls ausgewählt aus der Gruppe bestehend aus y-Glycidyloxypropyltrimethoxysilan, y-Glycidyloxypropyltriethoxysilan, 3-Aminopropyltrimethoxysilan, N-(2-Aminoethyl)-3-aminopropyltrimethxysilan, 3-Acryloxypropyltrimethoxysilan, 3-Acryloxypropyltriethoxysilan, 3-Methacryloxypropyltrimethoxysilan, 3-Methacryloxypropyltriethoxysilan, Methyltriethoxysilan und Tetraethoxysilan vermischt ist.

5. Geopolymeres Material gemäß Anspruch 1, **dadurch gekennzeichnet, daß** die Alkali-, bzw. Erdalkaliverbindung ausgewählt ist aus der Gruppe bestehend aus Salzen oder Hydroxiden von Na, K oder Ca, insbesondere NaOH, KOH, NaCl, KCl und Ca(OH)₂ ist.

6. Geopolymeres Material gemäß Anspruch 1, **dadurch gekennzeichnet, daß** das organische Polymer ausgewählt ist aus Polyacrylaten und Polymeren auf Epoxidbasis.

7. Geopolymeres Material gemäß Anspruch 6, **dadurch gekennzeichnet, daß** der Initiator für Acrylate und Methacrylate 1-Hydroxy-cyclohexyl-phenyl-keton und für Epoxide Iodonium, (4-methylphenyl) [4-(2-methylpropyl) phenyl]-hexafluorophosphat (1-))] ist.

8. Geopolymeres Material gemäß Anspruch 1, **dadurch gekennzeichnet, daß** das geopolymere Material 5 bis 25 Gew.-% Zusatzpigmente, ausgewählt aus der Gruppe bestehend aus Al, Al₂O₃, ZrO₂ und ZnO enthält.

9. Verfahren zur Herstellung eines geopolymeren Materials, **dadurch gekennzeichnet, daß**
• zur Herstellung einer Lösung A 25 bis 70 Gew.-% (bezogen auf die Gesamtmatrix) Kieselsäureester vorgelegt werden, die nur anorganisch über eine Hydrolyse- und Kondensationsreaktion miteinander vernetzt werden, wobei die Hydrolyse- und Kondensationsreaktion basisch mit 4,5 bis 15,5 Gew.-% (bezogen auf die Gesamtmatrix) Alkali- oder Erdalkaliverbindungen der Form NaOH, KOH, NaCl oder KCl gestartet wird und 22,5 bis 35 Gew.-% (bezogen auf die Gesamtmatrix) einer Metallverbindung der Form AIOOH, Aluminium-sec-butylat oder Zirkon-n-Propoxyd oder Titan-n-butylat zugegeben werden und
• zur Herstellung einer Lösung B 5 bis 35 Gew.-% (bezogen auf die Gesamtmatrix) Kieselsäureester vorgelegt werden, die nur anorganisch über eine Hydrolyse- und Kondensationsreaktion miteinander vorvernetzt werden, wobei die Hydrolyse- und Kondensationsreaktion neutral unter Rückfluß, basisch oder sauer mit 0 bis 4 Gew.-% einer Base oder einer Säure gestartet wird und 5 bis 25 Gew.-% (bezogen auf die Gesamtmatrix) eines organischen Polymers sowie 0,5 bis 4 Gew.-% (bezogen auf die Gesamtmatrix) eines entsprechenden Thermo- oder UV-Starters zugegeben werden und
• anschließend die Lösungen A und B miteinander gemischt werden.

10. Verfahren gemäß Anspruch 9, **dadurch gekennzeichnet, daß** in Lösung A Kieselsäureester der Form
R¹ₐSiX₄₋ₐ (Formel A)
verwendet werden, wobei in Formel A
die Reste R¹ gleich oder verschieden sind und nicht polymerisierbare, nichthydrolysierbare Gruppen darstellen,
die Reste X am Siliziumatom gleich oder verschieden sind und hydrolysierbare Gruppen oder Hydroxygruppen, allgemein Silanhaftgruppen sind und
a den Wert 0, 1, 2 oder 3 hat, oder einem davon abgeleiteten Oligomer.

11. Verfahren gemäß Anspruch 9, **dadurch gekennzeichnet, daß** in Lösung B Kieselsäureester der Form
R²ₐSiX₄₋ₐ (Formel B)
verwendet werden, wobei in Formel B
die Reste R² gleich oder verschieden sind und polymerisierbare, nichthydrolysierbare Gruppen darstellen,
die Reste X am Siliziumatom gleich oder verschieden sind und hydrolysierbare Gruppen oder Hydroxygruppen, allgemein Silanhaftgruppen sind und
a den Wert 1, 2 oder 3 hat, oder einem davon abgeleiteten Oligomer.

12. Verfahren gemäß Anspruch 9, **dadurch gekennzeichnet, daß** zu der Lösung A makroskopische Partikel zugegeben werden.

13. Verwendung des geopolymeren Materials gemäß den Ansprüchen 1 bis 8 als Bindemittel.

14. Verwendung des geopolymeren Materials gemäß den Ansprüchen 1 bis 8 als Beschichtungsmittel.

## Claims

1. Geopolymeric material, **characterised in that** the material contains 10 to 80 wt.% of film-forming precursors of a silicic acid ester and of one or more than one soluble metallic salt(s) of Al, Zr, Ti, Sn and Ce, 0 to 50 wt.% of nano- and/or microscale filler particles, 0.5 to 40 wt.% of alkali or alkaline-earth compound and 0.5 to 50 wt.% of organic polymer, wherein the polymer is cross-linked with the precursor by an initiator suitable for the particular polymer.

2. Geopolymeric material according to claim 1, **characterised in that** the soluble metal salt(s) is/are selected from the group consisting of AlOOH, aluminium sec-butoxide, zirconium n-propoxide and titanium n-butoxide.

3. Geopolymeric material according to claim 1, **characterised in that** the silicic acid esters are of the following formula:
RₐSiX₄₋ₐ (Formula 1),
where, in formula 1,
the R groups are identical or different polymerisable, non-hydrolysable groups,
the X groups attached to the silicon atom are identical or different hydrolysable groups or hydroxyl groups, in general silane coupling groups, and
a is 1,2, or 3, or of the formula of an oligomer derived therefrom.

4. Geopolymeric material according to claim 1, **characterised in that** the material is mixed with 1 to 80 % (relative to the weight of the geopolymeric material) of an anchor molecule selected from the group consisting of y-glycidyloxypropyltrimethoxysilane, y-glycidyloxypropyltriethoxysilane, 3-aminopropyltrimethoxysilane, N-(2-aminoethyl)-3-aminopropyltrimethoxysilane, 3-acryloxypropyltrimethoxysilane, 3-acryloxypropyltriethoxysilane, 3-methacryloxypropyltrimethoxysilane, 3-methacryloxypropyltriethoxysilane, methyltriethoxysilane and tetraethoxysilane.

5. Geopolymeric material according to claim 1, **characterised in that** the alkali or alkaline earth compound is selected from the group consisting of salts or hydroxides ofNa, K or Ca, in particular NaOh, KOH, NaCl, KCl and Ca(OH)₂.

6. Geopolymeric material according to claim 1, **characterised in that** the organic polymer is selected from polyacrylates and epoxy-based polymers.

7. Geopolymeric material according to claim 6, **characterised in that** the initator for acrylates and methacrylates is 1-hydroxy-cyclohexyl-phenyl-ketone and for epoxides is iodonium (4-methylphenyl) [4-(2-methylpropyl) phenyl]-hexafluorophosphate (1-)).

8. Geopolymeric material according to claim 1, **characterised in that** the geopolymeric material contains 5 to 25 wt.% of additional pigments, selected from the group consisting of Al, Al₂O₃, ZrO₂ and ZnO.

9. Method for producing a geopolymeric material, **characterised in that**
• to prepare a solution A, 22.5 to 35 wt.% (relative to the overall matrix) of a metal compound of the form AlOOH, aluminium sec-butoxide, zirconium n-propoxide or titanium n-butoxide is added to 25 to 70 wt.% (relative to the overall matrix) of silicic acid esters which have been cured, inorganically only, via hydrolysis and condensation reactions, the hydrolysis and condensation reactions having been initiated in an alkaline environment with 4.5 to 15.5 wt.% (relative to the overall matrix) of alkali or alkaline earth compounds of the form NaOH, KOH, NaCl or KCl and
• to prepare a solution B, 5 to 25 wt.% (relative to the overall matrix) of an organic polymer and 0.5 to 4 wt.% (relative to the overall matrix) of a suitable thermal or UV initiator are added to 5 to 35 wt.% (relative to the overall matrix) of silicic acid esters which have been precured, inorganically only, via hydrolysis and condensation reactions, the hydrolysis and condensation reactions having been initiated in a neutral environment by refluxing, or in an alkaline or acid environment with 0 to 4 wt.% (relative to the overall matrix) of a base or an acid, and that
• solutions A and B are subsequently mixed with each other.

10. Method according to claim 9, **characterised in that**, in solution A, silicic acid esters of the formula
R¹ₐSiX₄₋ₐ (Formula A)
are used, where, in formula A,
the R¹ groups are identical or different non-polymerisable, non-hydrolysable groups,
the X groups attached to the silicon atom are identical or different hydrolysable groups or hydroxyl groups, in general silane coupling groups, and
a is 1,2, or 3, or of the formula of an oligomer derived therefrom.

11. Method according to claim 9, **characterised in that**, in solution B, esters of the formula
R²ₐSiX₄₋ₐ (Formula B)
are used, where, in formula B,
the R² groups are identical or different polymerisable, non-hydrolysable groups,
the X groups attached to the silicon atom are identical or different hydrolysable groups or hydroxyl groups, in general silane coupling groups, and
a is 1,2, or 3, or of the formula of an oligomer derived therefrom.

12. Method according to claim 9, **characterised in that** macroscopic particles are added to solution A.

13. Use of the geopolymeric material according to the claims 1 to 8 as a binder.

14. Use of the geopolymeric material according to the claims 1 to 8 as a coating agent.

## Revendications

1. Matériau géopolymère, **caractérisé en ce que** le matériau contient 10 à 80 % en poids de précurseurs formant des films d'un ester de silice et d'un sel métallique soluble ou de plusieurs sels métalliques solubles de Al, Zr, Ti, Sn et Ce, 0 à 50 % en poids de particules de charge de taille nanoscopique ou microscopique, 0,5 à 40 % en poids d'un composé alcalin ou alcalinoterreux et 0,5 à 50 % en poids d'un polymère organique, le polymère étant réticulé au précurseur par un initiateur adapté au polymère considéré.

2. Matériau géompolymère selon la revendication 1, **caractérisé en ce que** le ou les sels métalliques solubles sont choisis dans le groupe composé de AlOOH, *sec-*butylate d'aluminium, n-propoxyde de zirconium et n-butylate de titane.

3. Matériau géopolymère selon la revendication 1, **caractérisé en ce que** les esters de silice correspondent à la formule suivante :
RₐSiX₄₋ₐ (Formule 1),
dans laquelle formule 1
les restes R sont identiques ou différents et représentent des groupes polymérisables non hydrolysables,
les restes X sont identiques ou différents de l'atome de silicium et sont des groupes hydrolysables ou des groupes hydroxy, de façon générale des groupes d'adhésion aux silanes, et
a prend la valeur 1, 2 ou 3 ou d'un oligomère dérivé de ce composé.

4. Matériau géopolymère selon la revendication 1, **caractérisé en ce que** le matériau est mélangé avec 1 à 80 % en poids (rapporté à la masse du matériau géopolymère) d'une molécule d'ancrage choisie dans le groupe composé du y-glycidyloxypropyltriméthoxysilane, du y-glycidyloxypropyltriéthoxysilane, du 3-Aminopropyltriméthoxysilane, du N-(2-Aminoéthyl)-3-aminopropyltriméthoxysilane, du 3-acryloxypropyltriméthoxysilane, du 3-acryloxypropyltriéthoxysilane, du 3-méthacryloxypropyltriméthoxysilane, du 3-méthacryloxypropyltriéthoxysilane, du méthyltriéthoxysilane und du tétraéthoxysilane.

5. Matériau géopolymère selon la revendication 1, **caractérisé en ce que** le composé alcalin ou alcalinoterreux est choisi dans le groupe composé de sels ou d'hydroxydes de Na, K ou Ca, notamment de NaOH, KOH, NaCl, KCl et Ca(OH)₂.

6. Matériau géopolymère selon la revendication 1, **caractérisé en ce que** le polymère organique est choisi parmi les polyacrylates et les polymères à base d'époxyde.

7. Matériau géopolymère selon la revendication 6, **caractérisé en ce que** l'initiateur est 1-hydroxy-cyclohexyl-phényl-cétone pour les acrylates et les méthacrylates et iodonium, (4-méthylphényl) [4-(2-méthylpropyl) phényl]-hexafluorophosphat (1-))] pour les époxydes.

8. Matériau géopolymère selon la revendication 1, **caractérisé en ce que** le matériau géopolymère contient 5 à 25 % en poids de piments additifs, choisis dans le groupe composé de Al, Al₂O₃, ZrO₂ et ZnO.

9. Procédé pour la fabrication d'un matériau géopolymère, **caractérisé en ce que**
- pour la préparation d'une solution A, 25 à 70 % en poids (rapporté à l'ensemble de la matrice) d'ester de silice sont sont réticulés ensemble uniquement par voie minérale par le biais d'une réaction d'hydrolyse et de condensation, la réaction d'hydrolyse et de condensation étant initiée en milieu basique avec 4,5 à 15,5 % en poids (rapporté à l'ensemble de la matrice) de composés alcalins ou alcalinoterreux de la forme NaOH, KOH, NaCl ou KCl, et 22,5 à 35 % en poids (rapporté à l'ensemble de la matrice) d'un composé métallique de la forme AlOOH, sec-butylate d'aluminium ou n-propoxyde de zirconium ou n-butylate de titane sont ajoutés, et
- pour la préparation d'une solution B, 5 à 35 % en poids (rapporté à l'ensemble de la matrice) d'ester de silice sont préréticulés ensemble uniquement par voie minérale par le biais d'une réaction d'hydrolyse et de condensation, la réaction d'hydrolyse et de condensation étant initiée en milieu neutre sous reflux, en milieu basique ou en milieu acide avec 0 à 4 % en poids d'une base ou d'un acide, et 5 à 25 % en poids (rapporté à l'ensemble de la matrice) d'un polymère organique ainsi que 0,5 à 4 % en poids (rapporté à l'ensemble de la matrice) d'un starter thermique ou UV sont ajoutés,
- puis les solutions A et B sont mélangées ensemble.

10. Procédé selon la revendication 9, **caractérisé en ce que** dans la solution A des ester de silice de la forme
R¹ₐSiX₄₋ₐ (Formule A),
sont utilisés, dans laquelle formule A
les restes R¹ sont identiques ou différents et représentent des groupes non polymérisables et non hydrolysables,
les restes X sont identiques ou différents de l'atome de silicium et sont des groupes hydrolysables ou des groupes hydroxy, de façon générale des groupes d'adhésion aux silanes, et
a prend la valeur 1, 2 ou 3, ou d'un oligomère dérivé de ce composé.

11. Procédé selon la revendication 9, **caractérisé en ce que** dans la solution B, on utilise des esters de silice de la forme
R²ₐSiX₄₋ₐ (Formule B),
sont utilisés, dans laquelle formule B
les restes R² sont identiques ou différents et représentent des groupes polymérisables et non hydrolysables,
les restes X sont identiques ou différents de l'atome de silicium et sont des groupes hydrolysables ou des groupes hydroxy, de façon générale des groupes d'adhésion au silane, et
a prend la valeur 1, 2 ou 3, ou d'un oligomère dérivé de ce composé.

12. Procédé selon la revendication 9, **caractérisé en ce que** des particules macroscopiques sont ajoutées à la solution A.

13. Utilisation du matériau géopolymère selon les revendications 1 à 8 comme liant.

14. Utilisation du matériau géopolymère selon les revendications 1 à 8 comme produit de revêtement.
